# EUROPEAN PATENT SPECIFICATION

(11) **EP 1 247 497 B1**
(45) Date of publication and mention of the grant of the patent: **16.03.2005**
(21) Application number: 02252113.2
(22) Date of filing: 25.03.2002
(51) Int. Cl.: A61C 7/04

(54) **Orthodontic treatment pliers**
Zange zur orthodontischen Behandlung
Pince pour traitement orthodontique

(30) Priority: 04.04.2001 JP 2001105819
(43) Date of publication of application: 09.10.2002
(73) Proprietor: Tamura, Hajime, Tokyo (JP)
(72) Inventor: Tamura, Hajime, Tokyo (JP)
(74) Representative: Merrifield, Sarah Elizabeth

(56) References cited:
- US-A- 3 581 400
- US-A- 4 081 909

## Description

### BACKGROUND OF THE INVENTION

### Field of the Invention

The present invention relates to a tool for orthodontic treatment and, more particularly, to improvements in orthodontic pliers suitable for use in a work of bending a wire which is set in an orthodontic appliance inside the oral cavity.

### Description of the Related Art

Orthodontic treatment generally includes the installing of an orthodontic appliance on the teeth of a patient.

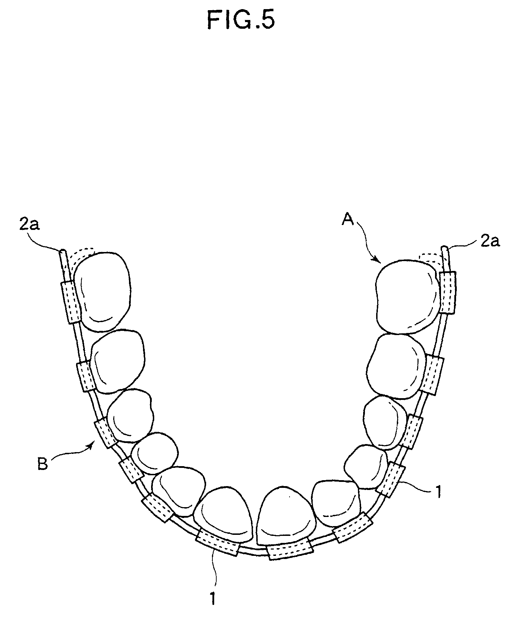

FIG. 5 shows a representative example of the configuration of an orthodontic appliance.

In FIG. 5, reference character A denotes a row of teeth, and reference character B indicates an orthodontic appliance installed on the row of teeth. In the orthodontic appliance, reference numeral 1 denotes slot brackets bonded to the teeth, and 2 denotes an arch wire (having the diameter of about 0.5 mm) inserted into the brackets so as to link the brackets. Projected wire portions 2a called distal portion projected from both ends of the row of teeth are bent to hold the teeth as shown by broken lines, thereby preventing the arch wire from being deviated.

Means of tying a tooth to be aligned to the wire with a fine wire is not shown.

A prior art orthodontic pliers device is disclosed in US 4,081,909, upon which the two-part form of claim 1 is based. This pair of pliers utilises two complementary curved jaw portions which when brought together around an orthodontic wire impart a bend in that wire.

The wire portions 2a projected from the ends the row of teeth of the arch wire 2 are bent by using pliers generally known as a cross-shaped gripping tool. However, the bending work using the pliers has the following problems.
(1) In the case of bending the projected wire portion 2a, pliers such as Howe pliers, utility pliers, or lingual arch utility pliers is used. However, those pliers are not developed for the purpose of bending the projected wire portion 2a, so that considerable familiarization is necessary to properly bend the wire portion 2a.
(2) At the time of bending the projected wire portion 2a, since a wire made of a shape memory alloy is not easily permanently deformed, the both end portions of the arch wire have to be subjected to pre-heat treatment (heat treatment for softening).
(3) In a bending method using a conventional tool, the wire is tensioned, so that force is applied to the teeth, and the patient often feels pain during the bending operation.
(4) In a bending method using a conventional tool, a tool used for the bending operation has to be selected in accordance with the material of the wire. Consequently, a number of tools have to be prepared.
(5) In a bending method using a conventional Lool, since a stress is applied on a member fixed to a tooth by adhesive bonding or the like, there is the possibility that the orthodontic appliance falls out.

### SUMMARY OF THE INVENTION

A main object of the present invention is to provide an orthodontic treatment pliers which can solve all the problems regarding a work of bending wire portions projected from the ends of a row of teeth of a wire which is set in an orthodontic appliance.

To achieve the object, the gist of the invention is an orthodontic pliers including: a hinge; a pair of arms as a grip extending from a crossed portion by using the hinge as a fulcrum of swinging to one direction; a pair of jaws extending to the other direction; and a pair of pinching portions having necessary length which are bent in parallel at a required angle toward a plane of locus of swing using the hinge as a fulcrum from the tips of the jaws, wherein one of the pinching portions has an L-letter shape or an almost L-letter shape in cross section and the other pinching portion has a shape which can engage with the L-letter shape of the pinching portion.

### BRIEF DESCRIPTION OF THE DRAWINGS

FIG. 1 is a front view of orthodontic treatment pliers showing an embodiment of the invention;
FIG. 2 is a side view of the pliers;
FIG. 3 is an enlarged perspective view of the main portion of the pliers;
FIGS. 4A and 4B are diagrams for explaining a state where a projected wire portion is bent by the pliers; and
FIG. 5 is a plan view showing a state where an orthodontic appliance is installed on a row of teeth.

### DESCRIPTION OF THE PREFERRED EMBODIMENT

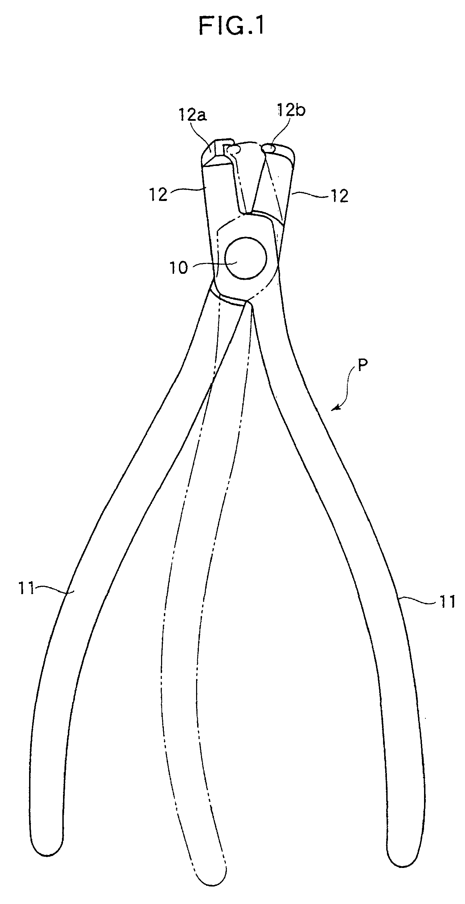

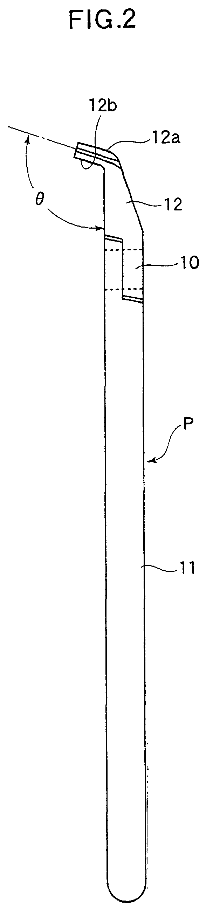

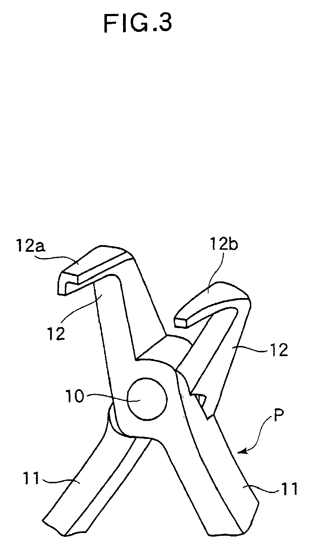

According to a preferred embodiment of the invention, as shown in FIGS. 1 to 4, a pliers has an hinge 10, a pair of arms 11 and 11 extending from the cross portion by using the hinge as a fulcrum of swinging to one direction, and a pair of jaws 12 and 12 extending to the other direction. In the pliers, pinching portions 12a and 12b having necessary length which are bent in parallel at a required angle toward the plane of locus of swing using the hinge 10 as a fulcrum are formed at the tips of the jaws 12 and 12. One of the pinching portions, 12a, has an almost L-letter shape in cross section and the other pinching portion 12b has a shape which can engage with the L-letter shape of the pinching portion 12a.

By using the pliers with the above configuration and pinching the wire portions 2a projected from the ends of the row A of teeth of the wire 2 set in the orthodontic appliance by the pinching portions 12a and 12b and operating the pliers so as to close the pinching portions 12a and 12b, each of the projected wire portions 2a can be easily bent at an angle so as to hold the tooth.

FIGS. 1 to 4 show an embodiment of the invention.

In the diagrams, reference character P denotes a pliers, reference numeral 10 denotes a hinge which serves as the fulcrum of swing as a component of the pliers, 11 denotes a pair of arms as a grip, which cross each other at the hinge as the fulcrum of swing, and 12 denotes a pair of jaws.

At the tips of the jaws 12 and 12, pinching portions 12a and 12b having a necessary length which are bent in parallel at a necessary angle toward the plane of locus of swing using the hinge 10 as a fulcrum of swing are formed.

The bending angle of each of the pinching portions 12a and 12b toward the plane of locus of swinging of the hinge 10 as a swing fulcrum denotes the angle θ of bending of the bending portions 12a and 12b from the front side face of the jaws 12 and 12. The bending angle θ is preferably an obtuse angle which is about 110 to 115 degrees. The effective length of each of the pinching portions 12a and 12b is about 5 mm.

One, 12a, of the pinching portions 12a and 12b has an almost L-letter shape in cross section and the other pinching portion 12b has a shape which can engage with the L-letter shape of the pinching portion 12a. The inner dimension of the L-letter shape of the pinching portion 12a is about 1 mm × 1 mm.

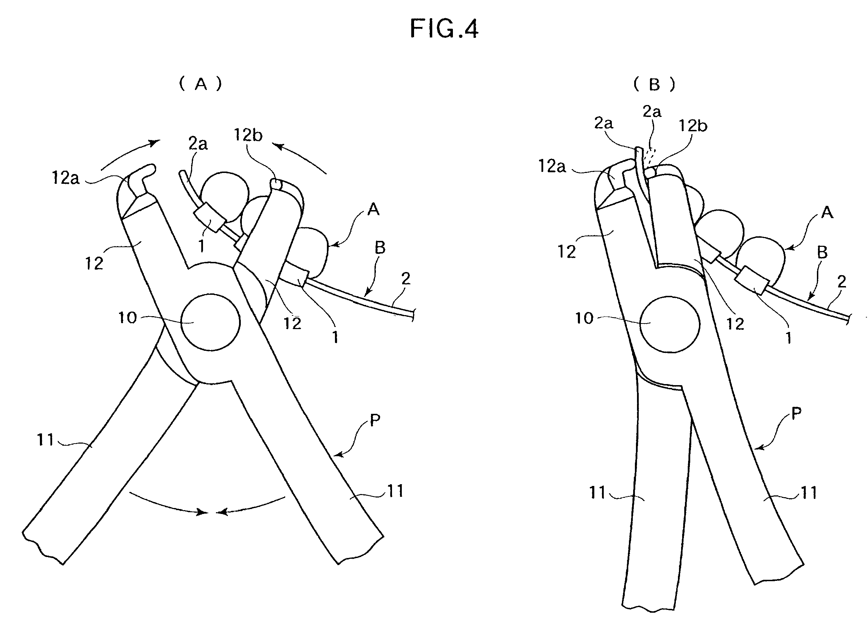

FIGS. 4A and 4B show a method of bending the wire portion 2a projected from the end of the row of teeth by the pliers P with the above configuration.

First, as shown in FIG. 4A, the user performs an operation of inserting the pliers P into the oral cavity by gripping the arms 11 and 11 as a grip, holding the pliers P in a posture that the projected wire portion 2a can be pinched by the pinching portions 12a and 12b at the tips of the arms 11 via the jaws 12 and 12 opened at a required angle and, as shown in FIG. 4B, closing the pinching portions 12a and 12b in the posture.

In the operation, the projected wire portion 2a supported by being overhung the end of the row of teeth is bent so as to hold the tooth by the pinching portion 12a of the L-letter shape and the pinching portion 12b engaged with the L-letter shape.

By using the pliers with the above configuration, the following effects are produced.
(1) Although considerable familiarization is required to properly bend a projected wire portion with the conventional pliers, by using the pliers of the invention, the projected wire portion can be easily bent with reliability.
(2) Even in the case of using a wire made of a shape memory alloy, it is unnecessary to perform heat treatment on the projected wire portion. Since the pliers of the invention can bend the projected wire portion at a very acute angle, except for some wires, bending can be performed without heat treatment.
(3) With the pliers of the invention, the wire is not tensioned and treatment using a local force is sufficient. Consequently, there is no fear that the patient feels pain.
(4) By using the pliers of the invention, all of wires used for clinical orthodontics can be bent.
(5) With the pliers of the invention, treatment of a local force is sufficient, so that the orthodontic appliance can be prevented from being fallen off.

The pliers of the embodiment are constructed to bend the wire portion projected from the one of the ends of the row of teeth. As the pliers for bending the wire portion projected from the other end portion, a pliers having the structure in which the pinching portions 12a and 12b shown in the diagram are interchanged is employed. That is, by preparing two sets of pliers, the projected wire portions projected from both ends of the row of teeth can be bent.

As specifically described above, according to the invention, the orthodontic treatment pliers effective at increasing efficiency of treatment work in orthodontic treatment and at lessening the pain the patient can be provided.

## Claims

1. An orthodontic treatment pliers comprising:
a hinge (10) ;
a pair of arms (11) as a grip extending from a crossed portion by using the hinge (10) as a fulcrum of swinging to one direction;
a pair of jaws (12) extending to the other direction; and
a pair of pinching portions (12a), (12b) having necessary length which are bent in parallel at a required angle toward a plane of locus of swing using the hinge (10) as a fulcrum from the tips of the jaws (12),
**characterised in that** one of the pinching portions (12a) has an L-letter or an almost L-letter shape in cross section and the other pinching portion (12b) has a shape which can engage with the L-letter shape of the pinching portion (12a).

2. The orthodontic treatment pliers according to claim 1, wherein the angle of bending each of the pinching portions (12a), (12b) from the tip of the jaw (12) toward the plane of locus of swing using the hinge as a fulcrum is an obtuse angle.

## Patentansprüche

1. Zange zur kieferorthopädischen Behandlung, umfassend:
ein Gelenk (10);
ein Paar Arme (11) als Griff, welche sich von einem gekreuzten Abschnitt erstrecken, wobei das Gelenk (10) als ein Schwenkpunkt zum Schwenken in eine Richtung verwendet wird;
ein Paar Backen (12), weiche sich in die andere Richtung erstrecken; und
ein Paar Kneifabschnitte (12a), (12b) von erforderlicher Länge, welche von den Spitzen der Backen (12) parallel in einem erforderlichen Winkel zu einer Ebene des Schwenkortes gekrümmt sind, wobei das Gelenk (10) als Schwenkpunkt verwendet wird, **dadurch gekennzeichnet, dass**
einer der Kneifabschnitte (12a) im Querschnitt eine L-Form oder ungefähr eine L-Form aufweist und der andere Kneifabschnitt (12b) eine Form aufweist, welche mit der L-Form des Kneifabschnitts (12a) eingreifen kann.

2. Zange zur kieferorthopädischen Behandlung nach Anspruch 1, wobei der Biegewinkel jedes der Kneifabschnitte (12a), (12b) von der Spitze der Backe (12) zu der Ebene des Schwenkortes unter Verwendung des Gelenks als Schwenkpunkt ein stumpfer Winkel ist.

## Revendications

1. Pince pour traitement orthodontique comprenant :
une articulation (10) ;
une paire de bras (11) servant de poignée, s'étendant depuis une partie croisée et utilisant l'articulation (10) comme point d'appui pour basculer dans un sens ;
une paire de mâchoires de serrage (12) s'étendant dans l'autre sens; et
une paire de parties de pincement (12a), (12b) ayant une longueur nécessaire qui sont courbées parallèlement selon un angle requis vers un plan de lieu de bascule utilisant l'articulation (10) comme point d'appui à partir de l'extrémité des mâchoires (12), **caractérisée en ce que**
l'une des parties de pincement (12a) a, en coupe transversale, la forme d'un L ou une forme qui s'en rapproche et l'autre partie de pincement (12b) a une forme qui peut venir en prise avec la forme de L de la partie de pincement (12a).

2. Pince pour traitement orthodontique selon la revendication 1, dans laquelle l'angle de courbure de chacune des parties de pincement (12a), (12b) à partir de l'extrémité de la mâchoire (12) vers le plan de lieu de bascule utilisant l'articulation comme point d'appui est un angle obtus.
